(19) **Europäisches Patentamt / European Patent Office / Office européen des brevets**

(11) **EP 4 506 890 B1**

(12) **EUROPEAN PATENT SPECIFICATION**

(45) Date of publication and mention
of the grant of the patent:
**22.10.2025 Bulletin 2025/43**

(21) Application number: **24465532.0**

(22) Date of filing: **13.06.2024**

(51) International Patent Classification (IPC):
**G06T 7/00** *(2017.01)* **G06T 5/60** *(2024.01)*

(52) Cooperative Patent Classification (CPC):
**G06T 7/0012; G06T 5/60;** G06T 2207/10132;
G06T 2207/20081; G06T 2207/30044

(54) **METHOD OF DETECTING HUMAN INTERNAL ORGANS ANOMALIES**

VERFAHREN ZUR ERKENNUNG VON ANOMALIEN AN MENSCHLICHEN INNEREN ORGANEN

PROCEDE DE DETECTION D'ANOMALIES D'ORGANES INTERNES HUMAINS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.08.2023 RO 202300431**

(43) Date of publication of application:
**12.02.2025 Bulletin 2025/07**

(73) Proprietor: **Universitatea Din Craiova
200585 Craiova (RO)**

(72) Inventors:
• **BELCIUG, Smaranda**
Craiova (RO)
• **ILIESCU, Dominic Gabriel**
Craiova (RO)
• **IVANESCU, Renato Constantin**
Craiova (RO)
• **ISPAS, Florin**
Craiova (RO)
• **NAGY, Rodica Daniela**
Craiova (RO)
• **ISTRATE-OFITERU, Anca Maria**
Slatina (RO)
• **COMANESCU, Cristina Maria**
Craiova (RO)
• **SERBANESCU, Mircea Sebastian**
Craiova (RO)
• **POPA, Sebastian Doru**
Craiova (RO)
• **NASCU, Andrei Gabriel**
Craiova (RO)

(74) Representative: **Petcu, Costin
Rominvent S.A. Patents
35, Ermil Pangratti Str.
1st Floor
Sector 1
011882 Bucuresti (RO)**

(56) References cited:
**US-A1- 2023 038 364     US-A1- 2023 038 364**

• **BELCIUG SMARANDA: "Learning deep neural
networks' architectures using differential
evolution. Case study: Medical imaging
processing", COMPUTERS IN BIOLOGY AND
MEDICINE, vol. 146, 1 July 2022 (2022-07-01), US,
pages 105623, XP093216363, ISSN: 0010-4825,
Retrieved from the Internet <URL:https://pdf.
sciencedirectassets.com/271150/
1-s2.0-S0010482522X0005X/
1-s2.0-S0010482522004152/main.pdf?
X-Amz-Security-Token=IQoJb3JpZ2luX2VjEN7////
//////
wEaCXVzLWVhc3QtMSJHMEUCIECjkeMJG
DoF9XKkhF1IQ0/
czCEfdZkvT5udFYXw8LgKAiEA0rOBWx+85QDc
IzCR9qXclieaPUraGsmlrK55akkyUVsqsgUIRxAF
GgwwNTkwMDM1NDY4NjUiDLSXw> DOI:
10.1016/j.compbiomed.2022.105623**

- BELCIUG SMARANDA ET AL: "Deep learning and Gaussian Mixture Modelling clustering mix. A new approach for fetal morphology view plane differentiation", JOURNAL OF BIOMEDICAL INFORMATICS, vol. 143, 1 July 2023 (2023-07-01), US, pages 104402, XP093216599, ISSN: 1532-0464, Retrieved from the Internet <URL:https://pdf.sciencedirectassets.com/272371/1-s2.0-S1532046423X00069/1-s2.0-S1532046423001235/main.pdf?X-Amz-Security-Token=IQoJb3JpZ2luX2VjECEaCXVzLWVhc3QtMSJGMEQCIFPd1VGL4LgCW50xR4SYJ4uPQFTzXCiH8uHF4A2y+t2DAiA587Nu/S84hpjfJWGIY/Zoe4E2OHOMuXhgIsH3hK1DZCq8BQiJ//////////8BEAUaDDA1OTAwMzU0Njg2NSIM9nwEN> DOI: 10.1016/j.jbi.2023.104402

- "Deep Learning", 18 November 2016, article GOODFELLOW IAN ET AL: "Bagging and Other Ensemble Methods", pages: 256 - 256, XP093217320
- "Deep Learning", 18 November 2016, article GOODFELLOW IAN ET AL: "Bagging and Other Ensemble Methods", pages: 256 - 256, XP093217320

**EP 4 506 890 B1**

**Description**

The invention refers to a method of detecting anomalies of the human internal organs, using Artificial Intelligence based on deep learning and statistical learning. The invention is particularly suited for improved detection of fetal congenital anomalies starting with the second trimester of pregnancy.

Fetal morphology is the most important prenatal diagnostic tool for determining congenital anomalies. It allows the evaluation of the organs' structure and functionality.

Fetal morphology is not a routine procedure. The detection rate of congenital anomalies for a sonographer with more than 2000 examinations is only 52% accuracy, while for a sonographer with less than 2000 examinations is 32.5% accuracy. The pre- and post-natal discrepancy of the congenital anomalies detection by a manually performed examination was reported to be 29% in live births (7% having an impact on long-term care), and 23% in fetal autopsies. A correct set prenatal diagnosis improves neonatal and paediatric care as well as neurological and surgical outcome. Current approaches have limitations, the reported sensitivity being between 27.5% and 96%.

Errors due to human misinterpretation are a cause of concern. Doctors might not detect congenital anomalies and possible treatments may not be prepared in time or applied (termination of pregnancy, preparing the neonatology team, surgical team, etc.). Congenital anomalies are the most common cause of fetal death, infant mortality and morbidity during childhood. Worldwide, every year, 7.9 million children are born with congenital anomalies. Even if some congenital anomalies can be controlled and treated, 3.2 million of these children will be disabled for life.

An undiagnosed fetus with congenital abnormalities leads to the birth of a child whose life is threatened, who may have one or more disabilities. These things affect the family's daily routine and finances. The level of damage is difficult to assess, as it depends on the severity of the disease and the family's health insurance situation. In addition to the social and economic impact, the mental impact on the family must also be considered.

The lack of necessary sonography know-how, fatigue, time pressure, fetal involuntary movement, and different characteristics of the patients, such as obesity (in case of adult patients), might make it difficult, or in some cases, impossible for a sonographer to get a clear ultrasound image.

Several attempts to create an automatic system for interpreting fetal morphologies have been reported in literature.

*Namburete et al. ("Fully automated alignment of 3D fetal brain ultrasound to a canonical reference space using multi-task learning")* proposed a fully connected neural network to segment the 3D fetal brain.

*Torrents-Barrena, J. et al. ("Assessment of radiomics and deep learning for the segmentation of fetal and maternal anatomy in magnetic resonance imaging and ultrasound")* discloses that a segmentation of fetal lungs and brain was created using deep learning, sequential feature selection techniques, and support vector machines for magnetic resonance and ultrasound images.

All the above systems share the following disadvantages:

- they use only one Artificial Intelligence method;
- they segment only parts of the fetus, not the fetus as a whole;
- they use 3D/4D or magnetic resonance images, which require special medical training, special conditions and are expensive.

Document US 2023/038364 A1 discloses a computer-implemented method for automatically detecting anatomical structures in a medical image of a subject, comprising a step of acquiring 2D medical images (which may be a time-series sequence of images acquired from a moving structure such as the heart) generated by any medical imaging modality such as ultrasound, a step of automatically identifying relevant planes/fields-of-view of the anatomical structure, a step of hierarchical anatomical identification in the medical images of the anatomical structures, a step of determining the probability of a pre-defined medical condition of the subject, a step of indicating said probability. A significant disadvantage of the described method is its reliance on a specific image structure, where a single neural network is first used to detect large objects. After these large objects are detected, the image is cropped, and a second neural network is then applied to detect smaller objects. This sequential, cropping-based process introduces inefficiencies in terms of both time and performance. Cropping the image not only adds computational overhead but also risks losing valuable contextual information, which could negatively impact the accuracy of the detections. Furthermore, the method does not statistically evaluate the performance of its neural networks, meaning it cannot guarantee that the chosen networks are optimal for the task.

The technical problem solved by the present invention is the automatic detection of the biometric planes and the subsequent automatic detection of the organ's anomalies. This is achieved by using accessible 2D ultrasound scans and by combining artificial intelligence algorithms such as convolutional neural networks and statistical learning.

The computer-implemented method of detecting human internal organs anomalies, according to the invention, comprises the following steps:

A) receiving data input consisting in a 2D ultrasonographic motion video of a human body (in case of a fetus) or body part (in case of an adult),

B) converting the ultrasonographic motion video into a plurality of consecutive still image frames,

C) determining a plurality of biometric planes from the still image frames,

D) identifying at least one internal organ from each biometric plane,

E) detecting if said at least one internal organ is normal or susceptible to have anomalies,

F) indicating the detected anomalies to a user.

According to the invention, each of the steps C), D and E) is performed by means of a respective set of Convolutional Neural Networks - abbreviated as CNNs.

According to the invention, each set of CNNs has an architecture established by Differential Evolution - abbreviated DE.

In a preferred embodiment, the CNNs of each set of CNNs are hierarchized depending on the result of one or more statistical tests chosen from: ANOVA test, Tukey test, z-test, Anderson-Darling test, Jarque-Bera test, Levene test, Brown-Forsythe test.

In a preferred embodiment, the CNNs of each set of CNNs are clustered using the Gaussian Mixture Modelling.

In a preferred embodiment, each of the steps C), D) and E) comprises the sub-steps:

x1) determining the weight of each cluster and of the best performing CNNs from said clusters,

x2) performing a synergetic weighted voting by the CNNs in order to, depending on the respective step C), D) or E), determine the biometric planes, identify the internal organs or detect the organs anomalies, respectively.

The invention further refers to a computer program product comprising instructions which, when the program is executed by a computer, cause the computer to carry out the method according to the invention.

The term "computer" must be interpreted broadly, i.e. any machine comprising a processor and capable to be programmed to automatically carry out sequences of arithmetic or logical operations.

The invention further refers to computer-readable medium having stored thereon the computer program product according to the invention.

The method according the invention has the main advantage that it significantly improves the reliability of organ anomaly detection and it serves as a valuable support for insufficiently experienced or tired doctors. Further advantages are:

- provides the automatic detection of the biometric planes and the subsequent automatic detection of the organ's anomalies;

- provides guidance for the ultrasound probe in view of acquiring an optimal ultrasonographic motion video;

- provides patients with high quality medical care, at significantly lower costs in respect to 3D/4D or MRI;

- helps the sonographers to establish a correct diagnosis, by bringing the technology to every small town, even in poor countries, and to increase confidence in the results of the morphological examination;

- dramatically reduces the risks of misinterpretation due to fatigue, time pressure, fetal involuntary movement, contractions or different patient characteristics.

The method according to the invention is based on Deep Learning - abbreviated DL and Convolutional Neural Networks - CNNs.

DL is the subset of machine learning methods based on artificial neural networks with representation learning.

A CNN is a special case of artificial neural networks, namely a regularized type of feed-forward neural network that learns feature engineering by itself via filters (or kernel) optimization.

The difference between CNNs and classical artificial neural networks consists in the number of layers. CNNs have many layers used to process data. The architecture of a CNN consists of three types of layers: convolutional layer, pooling layer, and fully connected layer. The convolutional layer uses filters that perform convolution operations by scanning the input and producing a feature map. The pooling layer is applied after a convolutional layer and down samples the feature map producing spatial invariance. The fully connected layer works on a flattened input, where each input is connected to all neurons.

The CNNs have hyperparameters such as: the size of the filter, the stride (the number of pixels by which the window moves after each operation), and zero-padding. CNNs are very effective at processing images, videos and sounds.

CNNs are trained using Supervised Learning. Supervised Learning is a training method wherein the network is presented with previously human classified data.

The invention will be described in connection with the figures 1-8, representing:

Figure 1: method steps according to the invention
Figure 2: CNN architecture built using Differential Evolution
Figure 3: general case diagram, showing the decision-making process for determining the biometric plane(s)/organ identification/anomaly identification
Figure 4: particular case diagram, showing the decision-making process for determining the biometric plane
Figure 5A: an unprocessed ultrasound image frame (2D image)
Figure 5B: the pre-processed image of figure 5A
Figure 6: different determined biometric planes
Figure 7: organs identification
Figure 8: example of organs status report

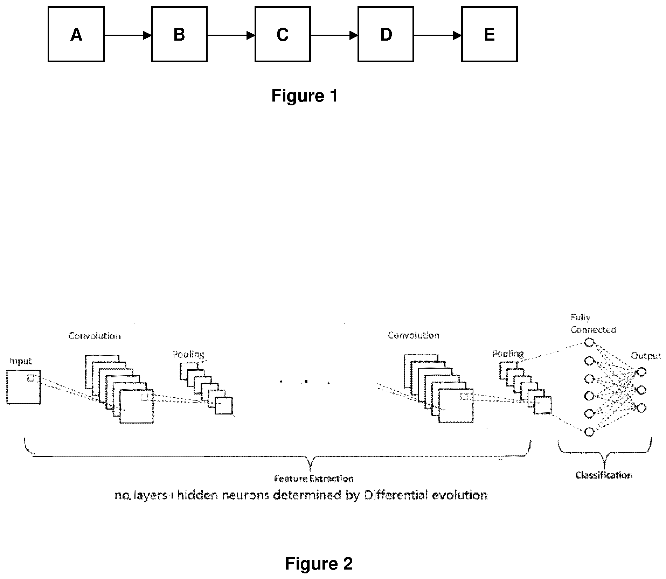

**Figure 1** shows the method steps according to the invention, namely:

step A: receiving data input consisting in a 2D ultrasonographic motion video of a human body or body part,
step B: converting the ultrasonographic motion video into a plurality of consecutive still image frames,
step C: determining a plurality of biometric planes from the still image frames,
step D: identification of at least one internal organ from each biometric plane,
step E: detecting if said at least one internal organ is normal or susceptible to have anomalies,
step F: indicating the detected anomalies to a user.

All the steps from B to F are carried out in an automatic manner by a computer.

The CNNs on which the method according to the invention is based need to have a specific architecture and need prior training.

The architecture of each CNN is established by Differential Evolution - abbreviated DE. DE is a heuristic optimization algorithm that mimics the natural biological evolution process. It generates a temporary individual having as starting point the differences within populations, followed by an evolutionary restructuration of the population. DE uses a population-based global search strategy. The mutation operation uses one-on-one competition. DE explores in parallel different solution and evaluates them using a fitness function.

An initial population of q individuals that represent the candidate architectures are randomly generated, $X_i = \{\lambda_i, nH_i, fw_i, fh_i, Cp_i, F_i\}$, where $\lambda$ represents the number of convolutional hidden layer, *nH* the number of neurons in the hidden layers, fw, fh the filter's width and height, Cp the recombination parameter, and F the variation factor. The CNNs built using these generated architectures are trained and their accuracies and losses over the validation dataset are recorded. Each CNNs' loss will represent the candidate solution's fitness value. We apply the mutation, recombination to each candidate solution and select the best performing one.

**Figure 2** shows an example of CNN architecture building, using Differential Evolution.

The CNNs of each set of CNNs are hierarchized depending on the result of one or more statistical tests chosen from: ANOVA test, Tukey test, z-test, Anderson-Darling test, Jarque-Bera test, Levene test, Brown-Forsythe test.

The Anderson-Darlin test uses distance-test based on the empirical cumulative distribution function and puts more weight on the observations in the tail of the distribution.

The Jarque & Bera test is a Lagrange multiplier test. It studies the skewness and kurtosis of the sample data to see if they match a normal distribution.

Levene and Brown Forsythe tests are used if the data sample is not governed by the Gaussian distribution.

The above statistical tests that verify the normality and variance are used in this example on the sample that holds the performances of the CNNs recorded while running them on the validation set for a certain number of times, number determined by the power analysis test.

ANOVA (Analysis of Variance) compares the means of two or more independent data samples to see whether there are significant differences between them. It uses the F-distribution.

Tukey's posthoc test uses the studentized range distribution. It compares all possible pairs of means. The test compares concurrently all the pairwise comparisons and identifies the difference between the groups means that are greater than the expected standard error.

The power of a statistical test is the probability that the test's result obtained on a small set would remain the same if applied on a larger scale. Power analysis is used in this example to compute the number of independent computer runs needed to achieve 95% power.

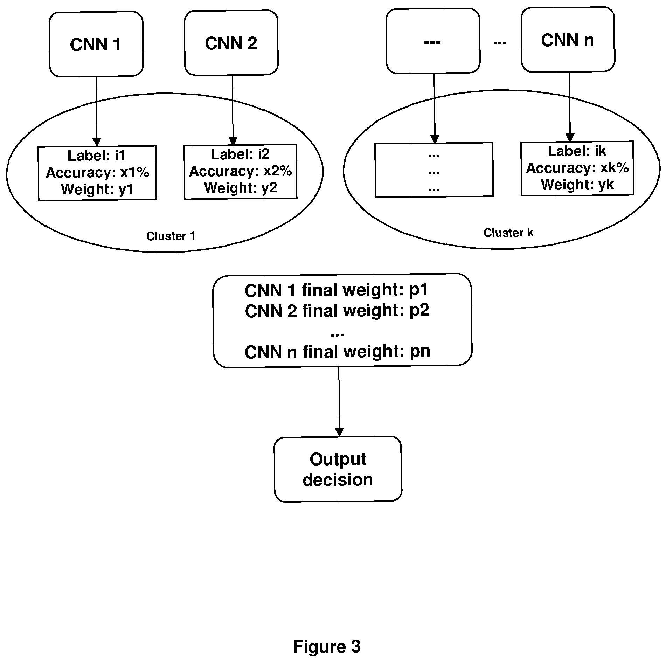

**Figure 3** shows general case diagram, showing the decision-making process for determining the biometric plane / organ identification / anomaly identification.

A plurality of CNNs, namely CNN 1, CNN 2, ... CNN n, are grouped into a plurality of clusters, namely Cluster 1, ..., Cluster k.

The CNNs of each set of CNNs are clustered using the Gaussian Mixture Modelling. Gaussian Mixture Modelling clustering technique uses a superposition of multiple Gaussian distributions. For a d-variate dimension X the probability distribution function uses μ, σ, and Σ (the mean, standard deviation, and covariance matrix):

$$f(X|\mu, \Sigma) = \frac{1}{\sqrt{2\pi|\Sigma|}} e^{\left(-\frac{1}{2}(X-\mu)^T \Sigma^{-1}(X-\mu)\right)} .$$

For *k* clusters, the mean, standard deviation, and covariance matrix must be estimated using the expectation maximization algorithm.

From each cluster the best performing CNN will be kept and will be assigned a weight directly proportional to its performance normalized with the performance of the cluster it belongs to (a convex combination of average performances)

$$\gamma_i = \frac{Avg(C_i)}{\sum Avg(C_i)}.$$ . The same computation is performed for the normalization of performances between clusters

$$\delta_{ij} = \frac{Avg(DL_{ij})}{\sum Avg(DL_{ij})}.$$ . The weight of each CNN will be calculated using the formula: $\gamma_i \cdot \delta_{ij}$.

The output decision regarding the establishment of the biometric plane / organ identification / anomaly identification will be taken collaboratively through a synergetic weighted voting system.

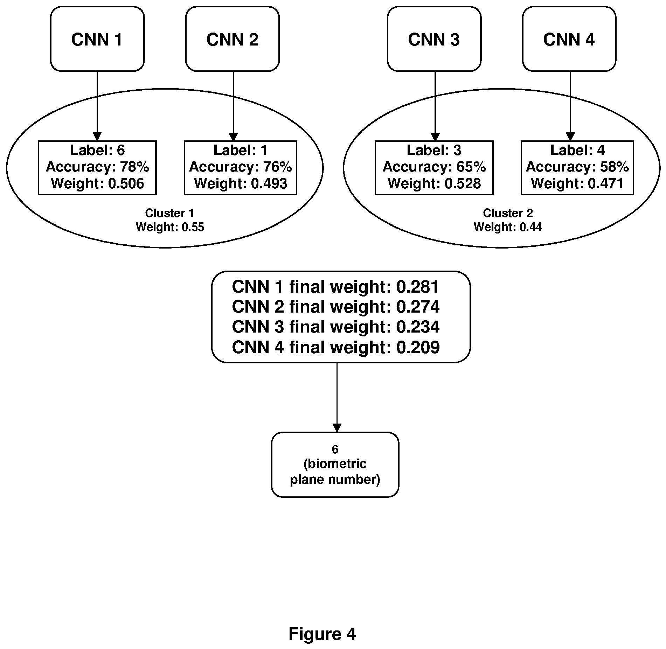

**Figure 4** shows a particular case diagram corresponding to a decision-making process for determining a biometric plane.

In this particular case there are four CNNs clustered into two clusters - Cluster 1 and Cluster 2.

After running the statistical tests mentioned above, to each CNN is assigned an accuracy and a weight. Each cluster is also assigned a weight. Each CNN determined a biometric plane (i.e. a "label"). In this case, CNN 1 determined label 6, CNN 2 determined label 1, CNN 3 determined label 3 and CNN 4 determined label 4. Then, a final weight for each CNN is calculated.

In this particular case, because CNN 1 final weight value is the biggest of all four, the output decision will be the label indicated by CNN 1, namely "6", i.e. the biometric plane number six.

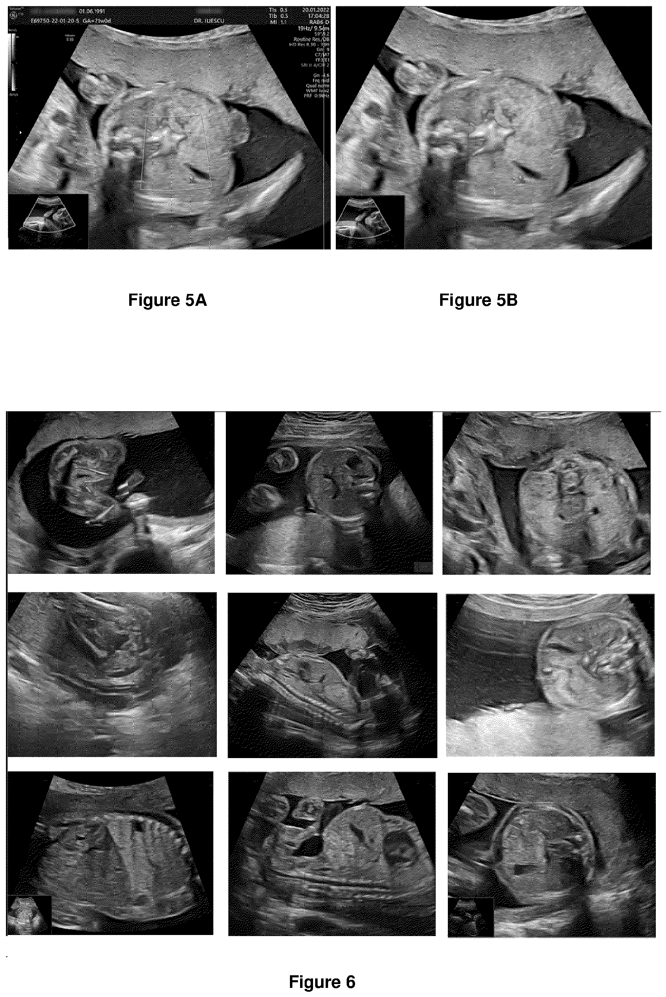

**Figure 5A** shows an unprocessed ultrasound image frame of a fetal morphology scan during the second trimester of pregnancy. This image includes text information (the date, the name of the doctor, different parameters, etc.) and an artefact (the trapeze shape). The text and artefact are not necessary for carrying out the method according to the invention.

**Figure 5B** shows the pre-processed image of figure 5A, wherein the text and the artefact have been removed (using software such as CV2 and Keras-OCR) and the deleted portions have been redrawn using the colour of the adjacent pixels.

**Figure 6** shows nine biometric planes determined by means of the method according to the invention.

Said biometric planes are (starting from top row, left to right):

- vessels plus bladder plane
- abdominal circumference plane
- anteroposterior kidney plane; bladder plane
- echogenic plane
- gallbladder plane
- longitudinal kidney plane
- cord insertion sagittal plane
- transabdominal cord insertion plane

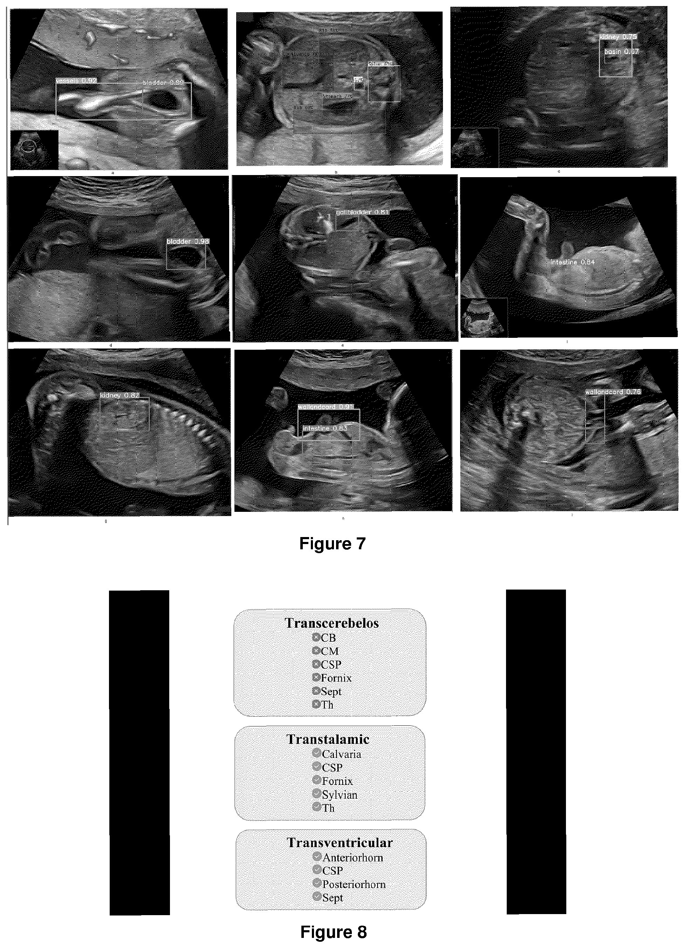

**Figure 7** shows organs identification and anomalies detection, by means of the method according to the invention, in each of the biometrical planes determined in figure 6. The organs are indicated to the user by a rectangle including the probability of correct identification of said organs. The status of each organ normal/abnormal will be displayed in a report when the fetal morphology is over. An example of such report is shown in **figure 8,** wherein :

- the "X" in a red circle means that the respective organs have an anomaly (or anomalies) or the organ was not identified (or was missing),
- the tik in a green circle means that the respective organs were identified and are normal.

Anomalies include also healthy organs situated in an abnormal position; for example the heart apex situated on the right side of the chest (dextrocardia).

It is obvious that, although the method according to the invention provides a reliable automatic organ anomalies detection, the final medical decision and diagnostic belongs to the doctor.

An example of carrying out the method according the invention, applied to the second trimester fetal morphology ultrasound scans, is described in the following paragraphs.

Six CNNs are used in this example. The numbers of trainable and non trainable parameters for each CNN are shown in Table 1.

**Table 1**

|  | Trainable parameters | Non-trainable parameters | Total parameters |
|---|---|---|---|
| CNN1 | 2, 104, 326 | 23, 587, 712 | 25, 692, 038 |
| CNN2 | 1, 55, 750 | 7, 37, 504 | 8, 93, 254 |
| CNN3 | 2, 689, 414 | 21, 802, 784 | 24, 492, 198 |
| CNN4 | 1, 317, 894 | 20, 331, 360 | 21, 649, 254 |
| CNN5 | 990, 214 | 2, 996, 352 | 3, 986, 566 |
| CNN6 | 2, 104, 326 | 20, 861, 480 | 22, 965, 806 |

In this example the power analysis revealed that 50 independent computer runs are needed to achieve 95% statistical power with type I error 0.05. In this example we have used the mean performance (accuracy) and corresponding standard deviation. The accuracy is quantified as $accuracy = \frac{TP+TN}{TP+TN+FP+FN} \cdot 100$. TP+TN+FP+FN

The average accuracy (ACA) and standard deviation (SD) of the six CNNs built using Differential Evolution is shown in Table 2.

**Table 2**

|  | ACA | SD |
|---|---|---|
| CNN1 | 87.93 | 2.99 |
| CNN2 | 73.97 | 2.23 |
| CNN3 | 46.16 | 2.13 |
| CNN4 | 93.22 | 1.60 |
| CNN5 | 88.66 | 1.87 |
| CNN6 | 48.75 | 2.72 |

The standard deviation SD value needs to be as small as possible, preferably below 3. In our example, all CNNs satisfy this condition.

The Normality tests results obtained on this example are shown in table 3.

**Table 3**

|  | Anderson-Darling | | Jarque Bera | |
|---|---|---|---|---|
|  | AD | p-level | JB | p-level |
| CNN1 | 15.64 | 0.000 | 16.09 | 0.000 |
| CNN2 | 16.26 | 0.000 | 16.51 | 0.000 |
| CNN3 | 15.50 | 0.000 | 16.32 | 0.000 |
| CNN4 | 16.62 | 0.000 | 16.55 | 0.000 |
| CNN5 | 16.43 | 0.000 | 16.50 | 0.000 |
| CNN6 | 15.22 | 0.000 | 16.25 | 0.000 |

$$AD = -n - \frac{1}{n}\sum_{i=1}^{n}(2i-1)[ln\phi(x_i) + \ln(1 - \phi(x_{n-i+1}))]$$

p = quantifies the strength of evidence against the null hypothesis. If p-level <= 0.05, then the results are significant, and there exists strong evidence against the null hypothesis, therefore it will be rejected, otherwise, the null hypothesis is accepted.

$$JB = n\left(\frac{\sqrt{b_1}^2}{6} + \frac{(b_2-3)^2}{24}\right)$$

In this example, the equality of variances showed that: CNN1 vs. CNN5, CNN4 vs. CNN5, and CNN5 vs. CNN6 have equal variances, (p-level > 0.05).

In this example, we made use of the fact that each one of the CNNs has been run independently 50 times, which means that we have the same number of observations in our samples, hence we can presume that the variances are equal and proceed with applying one-way ANOVA.

The one-way ANOVA technique test results are shown in Table 4.

**Table 4**

| SS | df | MS | F | p-level |
|---|---|---|---|---|
| 58615 | 5 | 11723 | 2197.4 | 0.000 |

SS = sum of squares
df = degrees of freedom
MS = mean squares
F = ratio

In this example, the Tukey's posthoc test revealed that there are statistically significant differences between all CNNs, except CNN1, CNN4, and CNN5.

Therefore, CNN1, CNN4 and CNN5 were all clustered in the same cluster.

The cluster system is shown in Table 5.

**Table 5**

| No.of clusters | p-level | Members of each cluster | Mean Performance %/ SD |
|---|---|---|---|
| | | $C_1$ ={CNN1, CNN4, CNN5} | 89.93 / 0.6 |
| 3 | 0.00003 | $C_2$ ={CNN2} | 73.97 / 2.23 |
| | | $C_3$ ={CNN3, CNN6} | 50.75 / 0.29 |

In this example the weights of the synergetic weighted voting systems are {33.0, 33.5, 33.3}.

A quantitative comparison was used using a hold-out testing move. The example system performance was compared with the performances of standalone networks (ResNet50, EfficientV2S, MobileNetV3Large), hard voting, soft voting, and bagging strategy.

The performance on hold-out test is shown in Table 6

**Table 6**

| | |
|---|---|
| SWVS | 89.22 |
| ResNet50 | 77.01 |
| EfficientV2S | 78.98 |
| MobileNetV3Large | 77.95 |
| Hard voting | 77.66 |
| Soft voting | 80.12 |
| Bagging strategy | 80.76 |

SWVS (System Weighted Voting System) is the system employed by the method according to the invention. SWVS is the best performant of all the above.

A further CNN7 was used to detect the organs. In this example we have used as performance measures: Precision, Recall, F1-score, Jaccard Index, and Probabilistic Rand index.

$$\text{Precision} = \frac{\text{True positive}}{\text{True positive} + \text{False positive}}$$

$$\text{Recall} = \frac{\text{True positive}}{\text{True positive} + \text{False Negative}}$$

$$F_1 \text{score} = \frac{\text{True positive}}{\text{True positive} + \frac{1}{2}(\text{False positive} + \text{False negative})}$$

$$\text{Rand index} = \frac{\text{True positive} + \text{True negative}}{\text{True positive} + \text{False positive} + \text{False negative} + \text{True negative}}$$

The detailed classification per organ using real time ultrasound motion video are shown in Table 7.

**Table 7**

| View plane | Organ | Precision | Recall | F1-score | Rand Index |
|---|---|---|---|---|---|
| 3 vessels plus bladder | Bladder | 0.891 | 0.882 | 0.884 | 0.850 |
| | Vessels | 0.923 | 0.942 | 0.930 | 0.921 |
| Abdominal circumference | Aorta | 0.660 | 0.656 | 0.759 | 0.722 |
| | Confluence | 0.792 | 0.799 | 0.796 | 0.767 |
| | Rib | 0.742 | 0.701 | 0.733 | 0.702 |
| | Spine | 0.755 | 0.748 | 0.754 | 0.721 |
| | Stomach | 0.861 | 0.872 | 0.870 | 0.821 |
| Bladder | Bladder | 0.988 | 0.976 | 0.978 | 0.934 |
| Echogenic | Intestines | 0.862 | 0.894 | 0.890 | 0.864 |
| Gallbladder | Gallbladder | 0.981 | 0.975 | 0.987 | 0.964 |
| Longitudinal kidney | Kidney | 0.832 | 0.876 | 0.871 | 0.852 |
| Cord insertion sagittal | Intestines | 0.833 | 0.803 | 0.822 | 0.819 |
| | Wall and cord | 0.912 | 0.906 | 0.909 | 0.899 |
| Transabdominal cord insertion | Wall and cord | 0.763 | 0.733 | 0.744 | 0.745 |

As seen in table 7, the precision values are very good (i.e. over 0.9) for the bladder, vessels, stomach, bladder, intestines, gallbladder, kidney, wall cord; is average (0.66) for the aorta; are good (i.e. between 0.7-0.9) for the rest of the organs. The above-mentioned "average" and "good" precision values can be increased to "very good" by further training of the CNNs.

**Non-Patent Literature References**

1. Namburete, A. et al., Fully automated alignment of 3D fetal brain ultrasound to a canonical reference space using multi-task learning. Med Image Anal. 46, 1-14, 2018.

2. Torrents-Barrena, J. et al. Assessment of radiomics and deep learning for the segmenation of fetal and maternal anatomy in magnetic resonance imaging and ultrasound. Acad. Radiol., S1076-6332(19)30575-6, 2019.

**Claims**

1.  A computer-implemented **method** of detecting human internal organs anomalies, comprising the steps:

    **A)** receiving data input consisting in a 2D ultrasonographic motion video of a human body or body part,
    **B)** converting the ultrasonographic motion video into a plurality of consecutive still image frames,
    **C)** determining a plurality of biometric planes from the still image frames,
    **D)** identifying at least one internal organ from each biometric plane,
    **E)** detecting if said at least one internal organ is normal or susceptible to have anomalies,
    **F)** indicating the detected anomalies to a user,

    **characterized in that**

    each of the steps C), D and E) is performed by means of a respective set of Convolutional Neural Networks (CNNs),
    and wherein each set of CNNs has an architecture established by Differential Evolution (DE).

2.  Computer-implemented **method** according to claim 1, wherein:

    - the CNNs of each set of CNNs are hierarchized depending on the result of one or more statistical tests chosen from: ANOVA test, Tukey test, z-test, Anderson-Darling test, Jarque-Bera test, Levene test, Brown-Forsythe test.
    - the CNNs of each set of CNNs are clustered using the Gaussian Mixture Modelling.

3.  Computer-implemented **method** according to claim 2, wherein each of the steps C), D) and E) comprises the sub-steps:

    **x1)** determining a weight of each cluster and of best performing CNNs from said clusters,
    **x2)** performing a synergetic weighted voting by the CNNs in order to, depending on the respective step C), D) or E), determine the biometric planes, identify the internal organs or detect the organs anomalies, respectively.

4.  A **computer program product** comprising instructions which, when the program is executed by a computer, cause the computer to carry out the method of any of the claims 1-3.

5.  A **computer-readable medium** having stored thereon the computer program product of claim 4.

**Patentansprüche**

1.  Computer-implementiertes **Verfahren** zum Erkennen von Anomalien der menschlichen inneren Organe, umfassend die folgenden Schritte:

    **A)** Empfangen von Eingangsdaten, die aus einem 2D-Ultraschall-Bewegungsvideo eines menschlichen Körpers oder Körperteils bestehen,
    **B)** Umwandlung des ultrasonographischen Bewegungsvideos in eine Vielzahl von aufeinanderfolgenden Bilderrahmen,
    **C)** Bestimmung einer Vielzahl biometrischer Ebenen aus den Bilderrahmen,
    **D)** Identifizierung von mindestens einem inneren Organ aus jeder biometrischen Ebene,
    **E)** Erkennen, ob das mindestens eine innere Organ normal ist oder Anomalien aufweisen kann,
    **F)** Anzeige der erkannten Anomalien an einen Benutzer,

    **dadurch gekennzeichnet, dass**

    jeder der Schritte C), D) und E) mittels eines jeweiligen Satzes von Convolutional Neural Networks (CNNs) durchgeführt wird,
    und wobei jeder Satz von CNNs eine durch Differential Evolution (DE) erstellte Architektur aufweist.

2.  Computer-implementiertes **Verfahren** nach Anspruch 1, wobei:

- die CNNs jedes Satzes von CNNs in Abhängigkeit vom Ergebnis eines oder mehrerer statistischer Tests, die ausgewählt werden aus: ANOVA-Test, Tukey-Test, z-Test, Anderson-Darling-Test, Jarque-Bera-Test, Levene-Test, Brown-Forsythe-Test, hierarchisiert werden,
- die CNNs jedes Satzes von CNNs mithilfe der Gaussian Mixture Modelling geclustert werden.

3. Computer-implementiertes **Verfahren** nach Anspruch 2, wobei jeder der Schritte C), D) und E) die Teilschritte umfasst:

   **x1)** Bestimmen einer Gewichtung jedes Clusters und der leistungsstärksten CNNs aus diesen Clustern,
   **x2)** Durchführen einer synergetischen gewichteten Abstimmung durch die CNNs, um je nach dem jeweiligen Schritt C), D) oder E) die biometrischen Ebenen zu bestimmen, die inneren Organe zu identifizieren oder die Organanomalien zu erkennen.

4. **Computer Programm Produkt,** das Anweisungen enthält, die, wenn das Programm von einem Computer ausgeführt wird, den Computer veranlassen, das Verfahren nach einem der Ansprüche 1 bis 3 auszuführen.

5. **Computerlesbares Medium,** auf dem das Computer Programm Produkt nach Anspruch 4 gespeichert ist.

**Revendications**

1. **Procédé** mis en œuvre par ordinateur pour détecter les anomalies des organes internes humains, comprenant les étapes suivantes :

   **A)** recevoir des données d'entrée consistant en une vidéo de mouvement ultrasonographique 2D d'un corps ou d'une partie du corps humain,
   **B)** conversion de la vidéo ultrasonographique en plusieurs images fixes consécutives,
   **C)** déterminer une pluralité de plans biométriques à partir des images fixes,
   **D)** identification d'au moins un organe interne à partir de chaque plan biométrique,
   **E)** détecter si ledit au moins un organe interne est normal ou susceptible de présenter des anomalies,
   **F)** indiquer les anomalies détectées à un utilisateur,

   **caractérisé en ce que**

   chacune des étapes C), D et E) est réalisée au moyen d'un ensemble respectif de réseaux neuronaux convolutifs (CNN),
   où chaque ensemble de CNNs a une architecture établie par évolution différentielle (DE).

2. **Procédé** mis en œuvre par ordinateur selon la revendication 1, dans lequel :

   - les CNN de chaque ensemble de CNNs sont hiérarchisés en fonction du résultat d'un ou de plusieurs tests statistiques choisis parmi: le test ANOVA, le test Tukey, le test z, le test Anderson-Darling, le test Jarque-Bera, le test Levene, le test Brown-Forsythe.
   - les CNN de chaque ensemble de CNNs sont regroupés à l'aide de Gaussian Mixture Modelling.

3. **Procédé** mis en œuvre par ordinateur selon la revendication 2, dans lequel chacune des étapes C), D) et E) comprend les sous-étapes suivantes

   **x1)** déterminer le poids de chaque cluster et des CNN les plus performants de ces clusters,
   **x2)** effectuer un vote synergique pondéré par les CNNs afin, selon l'étape C), D) ou E) respective, de déterminer les plans biométriques, d'identifier les organes internes ou de détecter les anomalies des organes, respectivement.

4. **Produit programme d'ordinateur** comprenant des instructions qui, lorsque le programme est exécuté par un ordinateur, permettent à l'ordinateur de mettre en œuvre le procédé de l'une des revendications 1 à 3.

5. **Support lisible par ordinateur** sur lequel est stocké le produit programme d'ordinateur de la revendication 4.

**Figure 1**

**Figure 2**

Figure 3

CNN 1    CNN 2          CNN 3    CNN 4

Label: 6          Label: 1          Label: 3          Label: 4
Accuracy: 78%     Accuracy: 76%     Accuracy: 65%     Accuracy: 58%
Weight: 0.506     Weight: 0.493     Weight: 0.528     Weight: 0.471

Cluster 1                          Cluster 2
Weight: 0.55                       Weight: 0.44

CNN 1 final weight: 0.281
CNN 2 final weight: 0.274
CNN 3 final weight: 0.234
CNN 4 final weight: 0.209

6
(biometric
plane number)

Figure 4

**Figure 5A**                    **Figure 5B**

**Figure 6**

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023038364 A1

**Non-patent literature cited in the description**

- **NAMBURETE, A. et al.** Fully automated alignment of 3D fetal brain ultrasound to a canonical reference space using multi-task learning. *Med Image Anal.*, 2018, vol. 46, 1-14

- **TORRENTS-BARRENA, J. et al.** Assessment of radiomics and deep learning for the segmenation of fetal and maternal anatomy in magnetic resonance imaging and ultrasound. *Acad. Radiol.*, 2019, vol. 30575-6 (19), S1076-6332